Europäisches Patentamt

**European Patent Office**

Office européen des brevets

(19)

(11) Publication number: **0 164 453**
A1

# (12) EUROPEAN PATENT APPLICATION

(21) Application number: **84200848.4**

(22) Date of filing: **13.06.84**

(51) Int. Cl.⁴: **B 29 B 7/72**

(43) Date of publication of application:
18.12.85 Bulletin 85/51

(84) Designated Contracting States:
AT BE CH DE FR GB IT LI LU NL SE

(71) Applicant: Haagen Chemie B.V.
Molenweg 10
NL-6041 KV Roermond(NL)

(72) Inventor: Daelman, Carl, Dr.
Willem II Singel 56
NL-6041 HT Roermond(NL)

(72) Inventor: Strijland, Jan, Drs.
Kitskendal 13
NL-6045 EW Roermond(NL)

(72) Inventor: Wingens, Marcel Josef Guillaume
Molenweg 1 B
NL-6041 KV Roermond(NL)

(74) Representative: van der Saag, Johannes et al,
OCTROOIBUREAU VRIESENDORP & GAADE P.O. Box
266
NL-2501 AW The Hague(NL)

(54) **Process for preparing particular free flowing concentrates of thermoplastic polymers and additives which are low in dust contents.**

(57) The invention relates to a process for preparing particulate free flowing concentrates of thermoplastic polymers and additives therefor, said concentrates being low in dust content, by intimately mixing powdery polymer and powdery additives with small amounts of plasticizer in a high speed mixer, during the mixing the power consumed by the mixing means being limited, and when reaching the maximum power consumption the number of revolutions of said mixing means being reduced, while maintaining that power.

adjustment : max. Amperage          100 %
            number of revolutions
            at end of mixing cycle   70 %

FIG. 1

-1-

A process for preparing particulate free flowing concentrates of thermoplastic polymers and additives therefor, said concentrates being low in dust content.

The invention relates to a process for preparing particulate free flowing concentrates of thermoplastic polymers and additives therefor, said concentrates being low in dust content, by intimately mixing powdery polymer and powdery additives in a weight ratio of powdery polymer to powdery additives of at most 1:9 with small amounts of plasticizer and/or lubricant.

Approximately 90% of the total world consumption of plastics is formed by thermoplastic polymers, in particular the so-called "bulk polymers", for example vinyl halide (co)polymers such as polyvinyl chloride, polyolefines, such as high- and low-pressure polyethylene and high- and low pressure polypropylene and the styrene-(co)polymers, such as polystyrene and ABS.

Producers supply said thermoplastic polymers in the form of powders, from which the processing industry, e.g. by extruding or by injection moulding, make articles.

For said manufacturing of articles the polymer powders are to be premixed with various kinds of additives required for the processing and/or for obtaining the final properties of the articles (Kirk-Othmer, Encyclopedia of Chemical Technology, 2nd Ed. Vol. 15, page 800 (1968).

It depends on the polymer which additives have to be applied (vide J. Voigt, Die Stabilisierung der Kunststoffe gegen Licht und Wärme, Springer Verlag 1966, pages 256-259; K. Thinius, Stabilisierung und Alterung von Plastwerkstoffen, Vol. I, Verlag Chemie 1969, page 236).

Before processing polyolefines in general supplied by producers as anti-oxydant-containing powders are to be mixed with metal soaps (e.g. Ca-stearate or a Ca- and Zn-stearate mixture) functioning as stabilizer, but especially as lubricant or releasing agent and also optionally with pigments and/or fillers, flame retardants, U.V.-stabilizers and the like.

Polystyrene and ABS, before processing, must also be mixed with metal soaps functioning as stabiliser, but especially functioning as lubricant and releasing agent, and if desired can also be mixed with pigments, fillers, flame retardants, U.V.-stabilizers and the like.

Vinyl halide-polymers, such as polyvinyl chloride, and copolymers of vinyl chloride with compatible monomers substantially consisting of vinyl chloride rests, are to be mixed with (heavy) metal stabilizers, such as basic inorganic lead salts and basic lead soaps, mixtures of barium- and cadmium soaps, mixture of Ca- and Zn-soaps, with antioxidants, U.V.-stabilizers, lubricants, inter alia metal soaps and if desired with plasticizers.

A great deal of these additives, for example the metal soaps such as Pb-, Cd-, Ba-, Ca- and Zn-stearate, the pigments, the heavy-metal stabilizers, various fillers, such as chalk and baryte, are very dusty which leads to problems in plants processing this kind of thermoplastic polymers, on the one hand because of the danger of dust explosions, and on the other hand because some additives, notably lead stabilizers, are toxic and may affect the health.

For vinyl halide polymers it is already known to draft these problems by means of a process of the type mentioned in the preamble.

For example, in U.S. patent specification 3 905 927 such a process for the preparation of vinyl halide additive concentrates is disclosed, said concentrates comprising 60 to 90% by weight of stabilizer; 5 to 35% by weight of polyvinyl chloride; 0.1 to 20% by weight of plasticizer and 0.5 to 15% by weight of lubricant, and in particular 75 to 85% by weight of stabilizer, 10 to 20% by weight of polyvinyl chloride; 2 to 15% by weight of plasticizer and 1 to 3% by weight of lubricant.

The preparation of said mixtures can take place in any mixer, such as a sigma-blade mixer (a kneading mixer having a sigma-shaped mixing means) a ribbon blender or a high speed mixer (coffee blender) and the components, optionally preheated, are fed to the mixer in any sequence.

With said process, irrespective of the kind of mixer used and irrespective of the fact that one or more of the components are preheated, suitable concentrates ("masterbatch mixtures") are obtained, but the mixtures being prepared in a slowly processing mixer, for example a sigma-blade mixer or a ribbon blender, starting from non-preheated components, at the end of the mixing process the mixture having a temperature of about $25^{\circ}$ to $35^{\circ}$C, show highly profitable properties in practice, as appeared in applicants investigation.

-4-

Under the microscope the concentrate particles look like more or less homogenous polymer particles, the surface of which varying from a rather smooth surface when the additive particles penetrated the surface of the polymer to a somewhat coarse (sawdust) surface, in case the additive particles are attached to the surface of the polymer.

In Belgian patent specification 866 227 a process for the preparation of concentrates (masterbatch mixtures) of polyvinyl chloride with stabilizers and small amounts of plasticizer(s) and/or lubricant(s) is disclosed, wherein the mixing conditions are even adjusted in such a manner that mixing takes place at the environmental temperature (15-25$^{o}$C), by using slowly processing mixers (sigma-blade mixers) and/or by cooling the mixer during the mixing process when using high speed mixers, such as turbo mixers. With amounts of plasticizer and/or lubricant of at most 5 parts by weight on 100 parts by weight of polyvinyl chloride plus stabilizer, according to said patent specification the polymer is activated by the plasticizer(s) and/or lubricant(s), so that the polymer easily absorbs the additive particles. In this manner a concentrate with excellent properties is produced in about 10 minutes.

In French patent specification 2 100 304 a process for the preparation of concentrates (masterbatch mixtures) of vinyl halide-polymers (polyvinyl chloride) with stabilizers and if desired also (small) amounts of plasticizer(s) and/or lubricant(s) is disclosed, said process, precisely reversed, being carried out at high temperature.

The powdered polymer and the powdered stabilizer(s) in a weight ratio of 1:5 to 5:1 are mixed in a turbo mixer externally brought at 80$^{o}$C, the temperature elevating to about 110$^{o}$C, followed by

cooling to 80°C and subsequently removing the concentrate from the mixer.

It was now discovered that, with a process of the kind mentioned in the preamble, while applying a high speed mixer, for example a turbo mixer or a Papenmeier- or Henschel mixer, vinyl halide polymer concentrates can be prepared which as to their properties are not surpassed by products obtained by mixing at low temperature, without cooling the mixer and also without external heating the mixer and its contents to reach temperatures of about 110°C during the mixing, when during the mixing the power consumed by the mixing means is limited, and when reaching the maximum power consumption the number of revolutions of said mixing means is reduced, while maintaining that power.

In addition it was found that with this process also excellent, particulate, free flowing concentrates of other thermoplastic polymers said concentrates being low in dust content, namely bulk polymers such as polyolefines and styrene polymers with powdered additives, can be produced.

The invention consequently relates to a process of the kind mentioned in the preamble characterized in that, while applying a high speed mixer, during mixing the power consumed by the mixing means is limited, and when reaching the maximum power consumption the number of revolutions of said mixing means is reduced, while maintaining that power.

Whereas in the known processes applying a high speed mixer, an excess of mixing energy and heat is supplied, which is to be removed either by cooling the mixer during the mixing process (Belgian patent specification 866 227), or must be removed afterwards, by cooling the mixture while stirring till below 80°C,

before discharging the mixer (French patent specification 2 100 304), in the process according to the invention exactly the required amount of mixing energy is fed/supplied in order to obtain the desired mixing results. Under these conditions a temperature of the mixture between about $40^{\circ}$C and $80^{\circ}$C is reached, measured 40 cm above the bottom of the mixing trough between the uppermost and central blades of the mixing means, and the concentrate is of a highly uniform particle size; when during mixing temperatures arise of > $90^{\circ}$C, in practice rather a lot of coarse particles are produced which give trouble in use, because they are hard to disperse in additional polymer.

This result can for example be reached by means of a hydraulic coupling between the motor and the mixing means of the high speed mixer. During mixing the powdery additives are included in and/or attached to the polymer particles, resulting in a certain densification of the mixture, and the resistance of the mixture in the mixer increases. Due to such a hydraulic coupling between stirring motor and mixing means the rate of the mixing means is reduced, while the stirring means does not release a greater power to the mixture.

Preferably the power consumed by the mixing means is, however, limited and controlled by means of a thyristor control upon the stirring motor. Whereas with a hydraulic coupling the power released by the mixing means is limited due to the fact that slip occurs in the hydraulic coupling when the resistance of the mixture in the mixer rises, the power absorbed by the stirring motor can be directly limited and controlled by a thyristor control, so that the desired results can better be controlled and in addition the energy consumption is minimized.

Due to the power limitation and control of the number-of-revolutions of the stirring motor the densifying phase can be controlled and a better average product quality is reached, while the capacity of the mixer can be utilized completely.

Determining for the properties of the product (concentrate) that is obtained with the process of the invention, is beside the above mentioned control of the power released by the mixing means, also the total amount of energy which is released by means of the mixing means of the high speed mixer to the components of the concentrate. Experience has taught that for each concentrate to be prepared (dependent on the composition), optimum properties are reached at a predetermined value for the total energy to be released to the mixture and that said condition are met, when the stirring rate of the mixing means has been reduced to a predetermined minimum.

Thus, preferably the mixer is switched off when a predetermined minimum number of revolutions of the mixing means is reached. In practice this boils down to 60-90% of the maximum mixing rate, then the concentrate has in general the most profitable properties.

For concentrates wherein light additives, such as alkaline earth metal soaps, are applied, that situation is generally reached after 5 to 10 minutes. For concentrates, wherein heavy additives are applied, such as inorganic lead stabilizers (basic lead salts with inorganic acids) this situation is generally reached after mixing for 1 to 4 minutes.

As additives the powdery additives usual for the respective polymer are used in the process according to the invention. As plasticizer and/or lubricants also the usual materials for this purpose exerting an activating activity on the polymer in the above mentioned sense, are also used.

The sequence wherein the components of the concentrates are combined, is not critical for the process according to the invention. For example, one can premix the polymer and the plasticizer and/or lubricant some time together, before adding the powdery additives, as is also done according to Belgian patent specification 866 227.

Preferably, however, according to the process of the invention powdery polymer and powdery additives are premixed at the maximum number of revolutions of the mixer and subsequently the plasticizers and/or lubricants are added. In this manner the plasticizer(s) and/or lubricants are easily distributed uniformly over the powdery mixture and the best result is achieved.

Premixing polymer and powdery additives preferably takes 5-10 s. Premixing for a shorter period than 5 s. does not produce a homogeneous distribution of polymer powder and powdery additives. Premixing for a longer period than 10 s. does not give any advantages and only prolongs the total mixing period.

In concentrates of the present kind the amount of active powdery additives, such as stabilizers and lubricants or releasing agents is preferably as high as possible, and the amount of plasticizer(s) and/or lubricant(s) is preferably as small as possible, because this produces concentrates which are the most profitable in practice.

Good results are obtained by applying powdery polymer and powdery additives in a mixing ratio of polymer to powdery additives of 1:1 to 1:9 and by using 1-5 parts by weight of plasticizer(s) and/or lubricants upon 100 parts by weight of polymer plus powdery additives and consequently it is preferred to maintain these ratios.

The process according to the invention is elucidated with reference to the figure schematically showing the power consumption by a high speed mixer, with thyristor controlled stirring motor against the mixing time and the number of revolutions of the mixing means against the mixing time and by means of the following examples.

Example 1

In a Papenmeier-mixer having a thyristor-controlled stirring motor were fed:

polyvinyl chloride powder (Varlan S5920)   50 parts by weight
powdery dibasic lead stearate              50 parts by weight.

The stirring means of the mixer was switched on at the maximum stirring rate (500 min.$^{-1}$);
the power consumption amounted to about 20% of the maximum power permissible for the motor.

After 10 s. there was added under continuous stirring:
dioctylphthalate (DOP)                     1.5 parts by weight.

After 7 minutes stirring motor at constant stirring rate the power consumed by the stirring motor has increased to the maximum power permissible for the stirring motor.

There after the power consumption was kept constant. The stirring rate decreased gradually. When the stirring rate had decreased to 350 min.$^{-1}$ ($\pm$ 8 min. after starting the mixing process) the mixer was switched off.

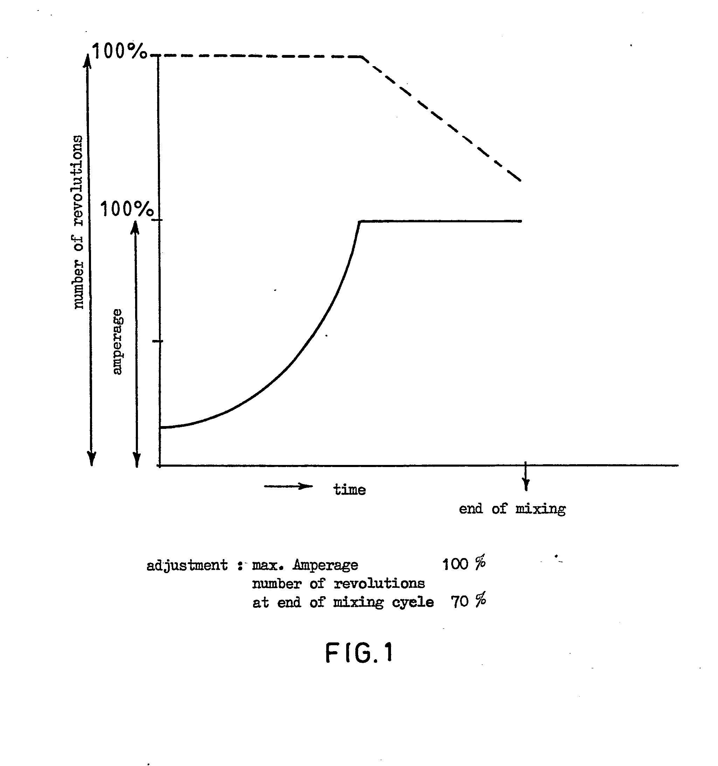

The mixture had a temperature of 60$^{\circ}$C and consisted of smooth polymer particles with low dust content, wherein the stabilizer was

-10-

completely embedded, having good free-flowing properties. The course of such a mixing process is reproduced in the graph of fig. 1.

Examples II up to and including XIX.

The process of example I was repeated, with the components mentioned in the following table, the mixing conditions were adjusted to the nature of the components.

In all cases first the polymer and the additive(s) were fed to the mixer and premixed at full mixing rate (500 min.$^{-1}$) for 10 s and subsequently under continuous stirring the plasticizer and/or the lubricant were added in one batch.

The other working conditions and the resul· achieved are also mentioned in the table.

| Example No. | kind of polymer | amount of polymer parts by weight | kind of additive | amount of additive parts by weight | kind of plasticizer/ lubricant | amount of plasticizer/ lubricant parts by weight | mixing time | temp. mixture | appearance of the concentrate particles | free flowability |
|---|---|---|---|---|---|---|---|---|---|---|
| II | susp.PVC [x] | 40 | dib.lead stear | 60 | DOP | 1,5 | 8 min. | 60°c | smooth polymer particles | excellent |
| III | susp.PVC | 30 | dib.lead stear | 70 | DOP | 2 | 8 min. | 60°C | smooth polymer particles | exc. |
| IV | susp.PVC | 50 | dib.lead phosphite | 50 | dicyclohexyl phthalate | 1 | 4 min. | 75 to 80°C | smooth polymer particles | exc. |
| V | susp.PVC | 40 | dib.lead phosphite | 60 | dicyclohexyl phthalate | 1 | 4 min. | 75 to 80°C | smooth polymer particles with saw dust spots | exc. |
| VI | susp.PVC | 29 | dib.lead phosphite 69 / dib.lead stear 2 | | dicyclohexyl phthalate | 1 | 4,5 min. | 75 to 80°C | smooth polymer particles | exc. |
| VII | susp.PVC | 30 | white lead | 70 | DOP | 4 | 3 min. | 70°C | smooth polymer particles | good |
| VIII | susp.PVC | 20 | white lead | 80 | DOP | 4 | 3 min. | 75 to 80°C | saw dust surface | good |
| IX | susp.PVC | 20 | Ba-stear 45 / Pb-stear 30 / antioxydant 5 } 80 | | DOP | 5 | 5 min. | 65°C | saw dust surface | exc. |
| X | susp.PVC | 50 | Ba-stear | 50 | epoxyester | 5 | 6 min. | 70°C | smooth polymer particles | exc. |
| XI | susp.PVC | 40 | Cd-laurate 36 / Ba-laurate 24 } 60 | | epoxyester | 5 | 5 min. | 55°C | smooth polymer particles | exc. |
| XII | susp.PVC | 40 | Cd-stear | 60 | epoxyester | 5 | 5 min. | 55°C | smooth polymer particles | exc. |
| XIII | susp.PVC | 50 | Cd-stear | 50 | DOP | 5 | 5 min. | 55°C | polymer particles with a lot of saw dust spots | good |
| XIV | susp.PVC | 40 | Ca-stear | 60 | DOP | 5 | 5 min. | 50°C | polymer particles having saw dust spots at intervals | exc. |
| XV | susp.PVC | 50 | Ca-stear | 50 | DOP | 5 | 5 min. | 40°C | polymer particles with sawdust surface | exc. |
| XVI | l.d.P.E.[xx] | 40 | Ca-stear | 60 | isooctylstear | 5 | 5 min. | 50°C | polymer particles with sawdust surface | exc. |
| XVII | p.d. P.E. | 25 | Ca-stear 54 / antioxidant 6 | | isooctylstear | 5 | 5 min. | 50°C | polymer particles with sawdust surface | good |
| XVIII | ABS 35[xxx] | 40 | Zn-stear | 60 | isooctylstear | 5 | 5 min. | 80°C | polymer particles with sawdust surface | exc. |
| XIX | l.d. P.E.[x] | 40 | Zn-stear | 60 | isooctylstear | 4 | 4 min. | 40°C | polymer particles with sawdust surface | exc. |

x : Both Varlan S 5920 (DSM) and Solvic 2644 GA (Solvay) were used in the tests.

xx : low pressure polyethylene MN 710 of Ind.Chemicals

xxx : Ronfalin F

Example XX

In the same mixer as used in Example I a concentrate was
prepared of:

| | |
|---|---|
| trib. lead sulfate | 47.5 parts by weight |
| dib. lead stear | 11.9 parts by weight |
| PVC powder (Varlan S 5920) | 39.6 parts by weight |
| DOP | 1 part by weight |

The trib. lead sulfate, the dibasic lead stearate and the PVC-powder were fed to the mixer and the mixer was switched on.

After starting the power comsumption amounted to 33% of the maximum power.
After premixing for 10 s DOP was added.
After 65 s the adjusted maximum power was reached.
Thereafter mixing was continued at uniform power, the number of revolutions of the mixing means decreasing.

When the number of revolutions of the mixing means had fallen to 80% of the maximum number of revolutions, the mixer was switched off. The total mixing period amounted to 90 s.

The final product was low in dust content and consisted of granules with saw dust spots.

Final temperature 40°C.

-1-

CLAIMS

1. A process for preparing particulate free flowing concentrates of thermoplastic polymers and additives therefor, said concentrates being low in dust content, by intimately mixing powdery polymer and powdery additives in a weight ratio of powdery polymer to powdery additives of at most 1:9 with small amounts of plasticizer and/or lubricant, characterized in that, while applying a high speed mixer, during the mixing the power consumed by the mixing means is limited, and when reaching the maximum power consumption the number of revolutions of said mixing means is reduced, while maintaining that power, the mixture obtaining a temperature between $40^{\circ}$ and $80^{\circ}$C.

2. A process according to claim 1, characterized in that a high speed mixer having a thyristor controlled motor is applied.

3. A process according to claim 1 or 2, characterized in that the mixer is switched off when a predetermined minimum number of revolutions is reached.

4. A process according to claim 1 or 2, characterized by first premixing the powdery polymer and the powdery additives at the maximum number of revolutions of the mixer and subsequently adding the plasticizer(s) and/or lubricant(s).

5. A process according to claim 4, characterized by premixing the polymer and the powdery additives for 5-10 s.

6. A process according to one of the preceding claims, characterized by applying the powdery polymer and the powdery additives in a mixing ratio of polymer to powdery additives of 1:1 to 1:9 and by using 1-5 parts by weight of plasticizer(s) and/or lubricant(s) upon 100 parts by weight of polymer plus powdery additives.

vanderSaag/DS/LvdM

adjustment : max. Amperage          100 %
            number of revolutions
            at end of mixing cycle   70 %

FIG.1

European Patent

Office

**EUROPEAN SEARCH REPORT**

0164453

Application number

EP 84 20 0848

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 019 722 (SHOHET)<br>* column 2, lines 35-41; column 3, lines 1-5 * | 1 | B 29 B 7/72 |
| | --- | | |
| A | WO-A-8 102 849 (TREDAIR INDUSTRIES)<br>* page 6, line 32 - page 7, line 1 * | 1,5 | |
| | --- | | |
| A | US-A-4 002 891 (PORTER)<br>* column 4, lines 7-28; figure 4 * | 1,4 | |
| | ----- | | |

TECHNICAL FIELDS
SEARCHED (Int. Cl.4)

B 29 B
B 01 F
B 28 C
C 08 J
C 08 K
C 08 L

The present search report has been drawn up for all claims

| Place of search THE HAGUE | Date of completion of the search 10-01-1985 | Examiner ASHLEY G.W. |
|---|---|---|